# EUROPEAN PATENT APPLICATION

(11) **EP 2 397 024 A1**
(43) Date of publication of application: **21.12.2011**
(21) Application number: 10740957.5
(22) Date of filing: 05.02.2010
(51) Int. Cl.: A01B 15/16, A01B 23/06

(54) **HARROW DISC FIXING MECHANISM**

(30) Priority: 16.02.2009 ES 200900291 U
(71) Applicant: Bellota Agrisolutions, S.L., 20230 Legazpia (Guipúzcoa) (ES)
(72) Inventor: LAZCANO LASA, Bakarne, E-20230 Legazpia (Guipúzcoa) (ES)
(74) Representative: Ungria Lopez, Javier
(86) International application number: PCT/ES2010/070065
(87) International publication number: WO 2010/092217

(57) **Abstract**

The invention relates to a harrow disc fixing mechanism for fixing a harrow disc (1) to a hub (2) provided on the main frame of the harrow and having a planet wheel (3) solidly connected thereto. According to the invention, the planet wheel (3) is provided with a projection (5) for centering the associated disc (1) as it is being mounted on the hub (2) and the disc (1) is provided with a central and circular hole (9) for receiving the centering projection (5). The invention is **characterized in that** the centering projection (5) protrudes from the planet wheel (3), said projection (5) having a frustoconical form with a cylindrical base. The invention is also **characterized in that** the disc (1) is provided with at least three elongate holes (7) arranged concentrically with the hole (9) and having a widened end (8), intended to receive corresponding screws (6) for fixing the disc (1), whereby said screws can be screwed into corresponding nuts (10).

## Description

### OBJECT OF THE INVENTION

The present invention, as expressed in the title of this specification, relates to a harrow disc fixing mechanism, provided for easily and quickly coupling or fixing a disc on the corresponding hub in harrows used in farming.

The object of the invention is to facilitate and perform the operation of fixing or disassembling a disc with respect to the corresponding hub established in the frame of an agricultural harrow, in the shortest time possible.

### BACKGROUND OF THE INVENTION

Ploughing systems or for agricultural work using harrows, make a cut of the vegetable matter that may be on the surface of the land, achieving a shredded of that vegetable matter that allows leaving the land in optimal conditions, or at least suitable for carrying out the seeding.

The invention is intended for application In disc harrows, and in particular for the mooring or fastening of the disc to the hub corresponding to the frame of the harrow.

As is known, disc harrows are formed by a plurality of discs with the shape of spherical cap rotating about respective hubs attached to the frame of the harrow, which hubs normally form certain angle with the forward direction, besides being inclined with respect to the horizontal plane that obviously corresponds to the land plane, all so that the land cut by each disc in the rotation thereof exerts pressure against the disc itself and makes it rotate.

As mentioned in the preceding paragraph, each disc will be related to a corresponding hub, which means that it is necessary to mount one by one the different discs on the corresponding hubs of the frame to form the harrow. Said assembly and/or disassembly operation, is laborious and there is no known system for quick change of the discs in their hubs.

Conventionally, the way of centering and coupling each disk to its respective hub is based on the fact that it has a sort of concentric cylindrical neck emerging frontally, which is the means for centering the disc on the hub itself, for which said disc has a hole centrally wherein the neck of the hub is inserted, the disc being thus centered and positioned to finally carry out its coupling or fixation, for which are used several screws passing through a plate of the disc and a flange of the hub on the holes of which the screws are threaded.

Obviously, the use of several screws for fastening the disc entails that the work, both for fixing and disassembly of the disc, for its change, is slow and uncomfortable, because it is necessary to release all the screws in order to carry out this assembly or disassembly of the disc.

### DESCRIPTION OF THE INVENTION

The invention consists of carrying out the fixing of the discs of an agricultural harrow to respective hubs established for this purpose in the corresponding frame, allowing simplifying the operation, making It more comfortable and drastically reducing the time spent on it.

According to the invention, the mechanism for fixing a harrow disc to the respective hub provided on the frame of the harrow, is based on using three or more screws passing through corresponding elongated holes with one of its ends widened established on the disc itself, which screws are threaded in nuts provided for this purpose in respective groovings made in a planet wheel solidly connected to the hub itself, either by screws and thus with the possibility of disassembly of said planet wheel with respect to the hub, either through a riveted joint, either by a welded joint or by a threaded joint between the planet wheel and the hub, or forming a single-piece body with it. In any case, the groovings for the nuts are polygonal to avoid rotation thereof in the threading of the screws for fixing the disc, such groovings being made on the back face of the planet wheel, i.e. in that facing the hub.

The elongated holes of the disc, with a widened end, are intended to allow assembly/disassembly of it without the need to remove the screws, since the widened end of the holes allows the passage of the heads of the screws, even when they are attached to the planet wheel, so that for the tightening, a little twist of the disc will be carried out to position the shank of the screw on the narrow section of the hole and thereby allow the corresponding tightening, since the width of said section of the holes is smaller than the head of the screw itself.

On the other hand, the hub has in its front end a frustoconical projection with a cylindrical base that can be used as a centering means in the assembly of the disc on the hub, by matching said projection with a central hole provided for that purpose on the disc, with particularity in that said frustoconical projection protrudes from the front face of the planet wheel solidly connected to the hub.

The disc also has a depression concentric to the surface where they are made, both the central hole for passage of the centering projection and the elongated holes, the depression of which has a suitable depth so that the heads of the screws and the centering projection emerging from the hub itself are located in it.

The groovings provided on the planet wheel can serve as a location for the nuts for fixing the screws or for placement of the heads of such screws themselves, in which case the shanks of these will protrude into the disc threading the nuts on the screws from the front of the disc.

Based on the mentioned fixing mechanism, it is not necessary to remove the screws as it is conventionally required, but it is enough to loosen them, slightly rotate the disc to face the heads of the screws to the widened end of the elongated holes, and remove the disc, which obviously represents a speeding up of the operation of the change of harrow discs with respect to the time conventionally spent.

Finally, the number of screws for fixing the disc will be a minimum of three, but surely can be four, five, six or even more screws, so that the disc will have in each case, as many elongated holes.

### BRIEF DESCRIPTION OF THE DRAWINGS

To complement the description that will be carried out in the following and in order to help better understand the features of the invention, a set of drawings is attached to the present specification based on which the innovations and benefits of the mechanism for fixing a disc to the hub of a harrow will be more easily understood, all of it performed in accordance with the object of the invention.
**Figure 1****.-** Shows a perspective exploded view of the different elements and/or components involved in the fixation of a disc on the hub of the frame of an agricultural harrow performed in accordance with the object of the invention.

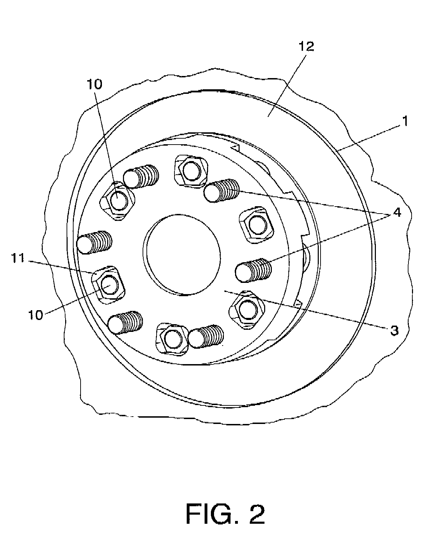

**Figure 2****.-** Shows a perspective view of the back face of the planet wheel to which the disc is fixed, showing the through screws for fixing the planet wheel to the hub, as well as the nuts for threading of the screws for fixing the disc, said nuts being located in the back groovings of the planet wheel.

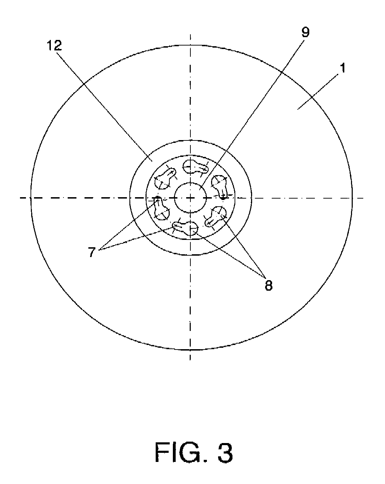

**Figure 3****.-** Shows a front view of the disc where the central hole of the disc for passage of the centering projection, and the elongated holes with widened end for passage of the fixing screws can be seen.
**Figure 4****.-** Shows a sectional view of the assembly and way of fixing the disc to the hub.

### DESCRIPTION OF THE PREFERRED EMBODIMENT

In the figures referred to, it can be seen how the mechanism of the invention is intended to fix the disc 1 of an agricultural harrow to the respective hub 2 established in the corresponding frame of the harrow, for which it has been provided first that the hub 2 is complemented by a planet wheel 3 which may be part of the single-piece body with the planet wheel 2, or get fix to it in a removable way through corresponding screws 4.

In any case, from the front of the planet wheel 3 a frustoconical protrusion or projection with cylindrical base 5 protrudes, this protrusion or projection 5 forming a centering means in the own assembly of the disc 1 on the corresponding hub 2.

On the other hand, it is envisaged that the fixation of said disc 1 to the hub 2, namely to the planet wheel 3 solidly connected to that hub 2, is carried out by corresponding screws 6, a minimum of three, although in the embodiment plotted and shown in the drawings six screws are included, as well as six screws 4 are included for fixing the planet wheel 3 to the hub 2. Those screws 6 pass through elongated holes 7 provided for this purpose on the disc 1, namely, concentric to the hole 9 for passage and location of the centering projection 5 mentioned above, so that those elongated holes 7 have one of their ends widened, according to reference 8, the width of which is larger than the corresponding head of the fixing screws 6, with the function that will be explained later.

Those screws 6 are threaded into corresponding heads 10 located in respective groovings 11 made for that purpose In the back face of the planet wheel 3, which groovings 11 are polygonal to prevent the rotation of the nuts 10 and allow the threading of the screws 6 and therefore fixing the disc 1 to the planet wheel 3 and ultimately to the hub 2 of the harrow frame.

In the groovings 11 the heads of the screws 6 may be placed, so that the nuts are arranged on the opposite face, i.e. on the front face of the disc 1 itself.

The widened ends 8 of the elongated holes 7 are provided to allow the assembly and disassembly of the disc 1 itself without removing the screws 6, since the heads thereof are introduced through those widened ends 8, placing the disc on the centering projection 5, then rotate such disc 1 so that the shanks of said screws 6 are positioned in the narrowest part of the elongated holes 7, carrying out the tightening of the screws 6 and finally fixing the disc 1 on the hub 2.

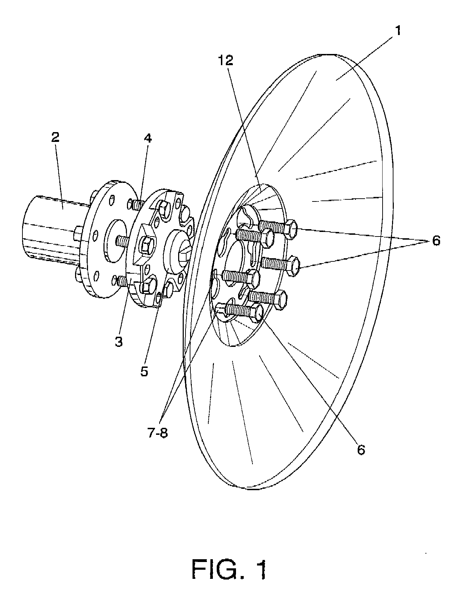

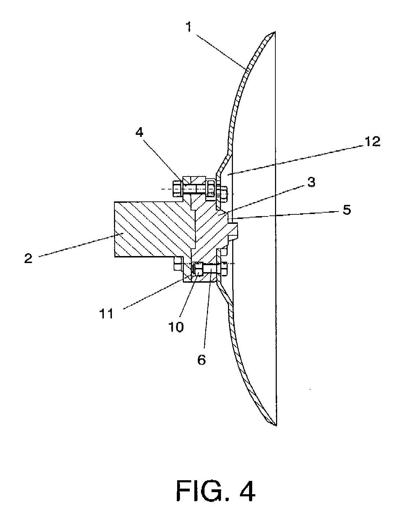

As it can be seen in figures 1 and 4, the disc 1 has concentrically to the flat part where the fixing holes 7 are made, a depression 12 where the heads of the screws 6 are without protruding, as well as the centering projection 5, as clearly seen in figure 4.

Also say that the planet wheel 3 on the front face also has groovings, by way of recesses for location of the heads of the screws 4 for fixing said planet wheel 3 to the hub 2, in the case that said fixation is performed with screws, since as it has also been mentioned the planet wheel 3 may be solidly connected forming a single-piece body with the hub 2.

## Claims

1. Harrow disc fixing mechanism, that being provided for fixing a harrow disc (1) to the corresponding hub (2) provided in the main frame of the harrow, to which hub (2) a planet wheel (3) is solidly connected with a centering projection (5) of the disc itself (1) in its assembly on the hub (2), the disc (1) being affected by a central and circular hole (9) for passage of the centering projection (5), is **characterized in that** said centering projection (5) protrudes from the planet wheel (3), said projection (5) having a frustoconical shape with cylindrical base, with the particularity that the disc (1) has concentrically to the hole (9), at least three elongated holes (7) with one of their ends widened (8) for the passage of corresponding screws (6) for fixing the disc (1), those screws being threadable in corresponding nuts (10).

2. Harrow disc fixing mechanism, according to claim 1, **characterized in that** the range of the widened end (8) of the elongated holes (7) of the disc (1) is greater than the head of the fixing screws (6) for allowing assembly/disassembly of the disc (1) without removing the screws (6).

3. Harrow disc fixing mechanism, according to claim 1, **characterized in that** on the back face of the planet wheel (3) have been provided location groovings (11) for the respective nuts (10) of the screws (6).

4. Harrow disc fixing mechanism, according to claim 1, **characterized in that** on the back face of the planet wheel (3) have been provided location groovings (11) for the respective heads of the screws (6).

5. Harrow disc fixing mechanism, according to claims 3 and 4, **characterized in that** the groovings (11) of the back face of the planet wheel (3) for the location of the nuts (10) for threading the fixing screws (6) of the disc (1), or as appropriate for the location of the heads of said screws (6), have a polygonal contour to prevent rotation of said nuts (10) or heads when threading the screws (6) on the same.

6. Harrow disc fixing mechanism, according to claim 1, **characterized in that** the planet wheel (3) with Its frustoconical projection (5), forms a single-piece body with the hub (2).

7. Harrow disc fixing mechanism, according to claim 1, **characterized in that** the planet wheel (3) with its frustoconical projection (5), is solidly connected to the hub (2) by a plurality of screws (4) passing through the planet wheel (3) itself and threadable in nuts provided on a flange of the hub (2) itself or at the hub (2) itself.

8. Harrow disc fixing mechanism, according to claim 1, **characterized in that** the planet wheel (3) and the hub (2) are joined together by riveting.

9. Harrow disc fixing mechanism, according to claim 1, **characterized in that** the planet wheel (3) and the hub (2) are joined together by welding.

10. Harrow disc fixing mechanism, according to claim 1, **characterized in that** the planet wheel (3) and the hub (2) are joined together by threaded on it.

11. Harrow disc fixing mechanism, according to claim 1, **characterized in that** the disc (1) has the central hole (9) and the elongated holes (7-8) made at the bottom at the bottom of said disc (1).
